# EUROPEAN PATENT APPLICATION

(11) **EP 3 282 557 A1**
(43) Date of publication of application: **14.02.2018**
(21) Application number: 16776267.3
(22) Date of filing: 23.03.2016
(51) Int. Cl.: H02J 50/10, A45D 27/46, A61C 17/22, B26B 19/38, H01F 38/14, H02J 7/00

(54) **NONCONTACT POWER SUPPLY DEVICE AND CONTROL DEVICE THEREFOR**

(30) Priority: 06.04.2015 JP 2015078056
(71) Applicant: Panasonic Intellectual Property Management Co., Ltd., Osaka-shi, Osaka 540-6207 (JP)
(72) Inventor: IWAMURA, Norihiro, Osaka-shi Osaka 540-6207 (JP); IWAO, Seiichi, Osaka-shi Osaka 540-6207 (JP); TSUTSUI, Mami, Osaka-shi Osaka 540-6207 (JP); KITAMURA, Hiroyasu, Osaka-shi Osaka 540-6207 (JP)
(74) Representative: Grünecker Patent- und Rechtsanwälte PartG mbB
(86) International application number: PCT/JP2016/001676
(87) International publication number: WO 2016/163089

(57) **Abstract**

A control device for a noncontact power supply device includes a power transmission coil for outputting an alternating magnetic flux upon receiving alternating electric power, and a power transmission control unit for controlling alternating electric power to be supplied to the power transmission coil. The power transmission control unit includes a first mode and a second mode. The first mode controls the alternating electric power to be supplied to the power transmission coil in order to transmit electric power, to be supplied to a load of a power reception device, to a power reception coil, and the second mode controls the alternating electric power for supplying electric power less than the electric power transmitted by the first mode to the power transmission coil. After being activated, the power transmission control unit selects initially the first mode.

## Description

### TECHNICAL FIELD

The present disclosure relates to a noncontact power supply device and a control device for the same.

### BACKGROUND ART

A conventional noncontact power supply device is formed of a power transmission device that transmits electric power with magnetic flux, and a power reception device that receives the electric power transmitted from the power transmission device. The power transmission device includes a power transmission coil that outputs an alternating magnetic flux upon reception of alternating electric power, multiple switching elements that carry out switch-on or switch-off of an electric contact between the power transmission coil and an a power supply, and a power transmission control unit that controls actions of the multiple switching elements. The power reception device includes a power reception coil that generates electric power upon an interlinkage with the alternating magnetic flux, and a load to which the electric power generated by the reception coil is supplied.

The foregoing conventional noncontact power supply device supplies the alternating electric power to the power transmission coil through the control over the switching elements, and the alternating electric power allows the transmission coil to output the alternating magnetic flux, which then interlinks with the power reception coil to supply the electric power to the load of the power reception device.

Patent Literature 1 discloses an example of the conventional noncontact power supply device, in which the noncontact power supply device selects a first mode when the power reception device is detected by the power transmission device. This first mode allows transmitting electric power, which is to be supplied to the load, to the power reception device. On the other hand, when the power transmission device does not detect the power reception device, a second mode is selected for outputting electric power less than that transmitted by the first mode.

The noncontact power supply device disclosed in Patent Literature 1 selects the second mode when the power transmission device does not detect the power reception device, and then, upon a detection of the power reception device, a command signal is output to multiple switching elements for switching the second mode to the first mode. This mechanism requires a time from when the command signal is output until when the first mode actually works, so that it is afraid that the electric power cannot be transmitted promptly from the transmission device to the reception device.

### Citation List

Patent Literature 1: Examined Japanese Patent No. 5544705

### SUMMARY OF THE DISCLOSURE

The present disclosure provides a noncontact power supply device that allows supplying electric power promptly from a power transmission device to a power reception device. The present disclosure also provides a control device for the same power supply device.

The control device is provided in the noncontact power supply device in accordance with an exemplary embodiment of the present disclosure in which the power supply device comprises the following structural elements:
a power transmission device including a power transmission coil for outputting an alternating magnetic flux upon receiving alternating electric power; and
a power reception device including a power reception coil for receiving the electric power transmitted with the aid of the alternating magnetic flux. The control device includes a power transmission control unit for controlling the alternating power to be supplied to the power transmission coil.

The power transmission control unit has two modes, viz. a first mode for controlling the alternating electric power to be supplied to the power transmission coil in order to supply electric power to a load of the power reception device, and a second mode for controlling alternating power that is used as electric power less than the electric power transmitted by the first mode. The power transmission control unit is structured to select initially the first mode after the control unit is activated.

The noncontact power supply device in accordance with an example of the embodiment of the present disclosure includes the control device discussed above.

The foregoing structure allows supplying electric power promptly from the power transmission device to the power reception device.

### BRIEF DESCRIPTION OF DRAWINGS

FIG. 1 is a perspective view of an electric toothbrush which employs a noncontact power supply device in accordance with a first embodiment of the present disclosure, and a charging stand.
FIG. 2 is a front view of the electric toothbrush shown in FIG. 1.
FIG. 3 is a sectional view cut along line 3 - 3 in FIG. 2.
FIG. 4 is a sectional view of the charging stand shown in FIG. 1.
FIG. 5 is a partial sectional view of the electric toothbrush and the charging stand shown in FIG. 1.
FIG. 6 is a block diagram of a power transmission device in a control device for the noncontact power supply device in accordance with the first embodiment of the present disclosure.
FIG. 7 is a block diagram of a magnet collector and a power reception device of the control device for the noncontact power supply device in accordance with the first embodiment.
FIG. 8 shows a waveform of alternating power, to be supplied to a power transmission coil, transmitted by the power transmission device of the control device for the noncontact power supply device in accordance with the first embodiment when a first mode is selected.
FIG. 9 shows a waveform of alternating power, to be supplied to a power transmission coil, transmitted by the power transmission device of the control device for the noncontact power supply device in accordance with the first embodiment when a second mode is selected.
FIG. 10 shows a waveform of the alternating power generated on the power reception coil of the power reception device of the control device for the noncontact power supply device in accordance with the first embodiment.
FIG. 11 is a flowchart of switching a power transmission mode done by a power transmission control unit of the control device for the noncontact power supply device in accordance with the first embodiment.
FIG. 12 is a flowchart of switching a power reception mode done by a power reception control unit of the control device for the noncontact power supply device in accordance with the first embodiment.
FIG. 13 show a timing chart of a first example of switching the power transmission mode done by the power transmission control unit of the power transmission device of the control device for the noncontact power supply device in accordance with the first embodiment.
FIG. 14 shows a timing chart of a second example of switching the power transmission mode done by the power transmission control unit of the power transmission device of the control device for the noncontact power supply device in accordance with the first embodiment.

### DESCRIPTION OF EMBODIMENTS

Exemplary embodiments of the present disclosure are demonstrated hereinafter with reference to the accompanying drawings. The present disclosure is not limited to these embodiments.

### FIRST EXEMPLARY EMBODIMENT

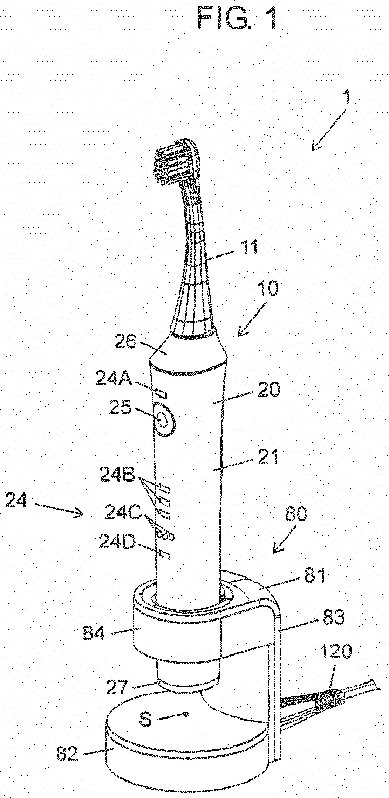

A structure of the noncontact power supply device in accordance with the first embodiment is detailed hereinafter with reference to FIG. 1 - FIG. 5.

As FIG. 1 shows, noncontact power supply device 1 is formed of electric toothbrush 10 and charging stand 80.

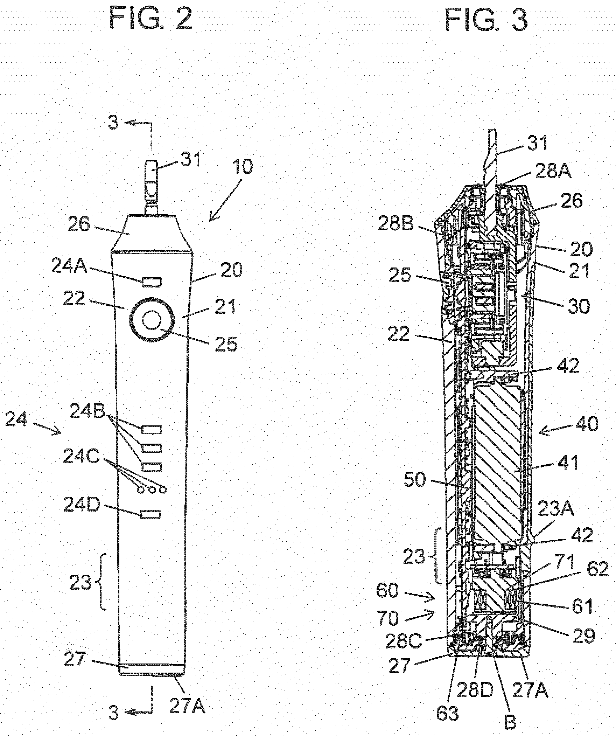

Electric toothbrush 10 includes pillar-shaped main body 20, and head 11 detachable from output shaft 31 (refer to FIG. 2) of driving section 30 of main body 20.

As FIG. 2 shows, main body 20 includes housing 21, display section 24, power-supply button 25, supporter 29 shown in FIG. 3, driving section 30, power supply section 40, substrate 50, power reception device 60, and magnet collector 70. Driving section 30, power supply 40, substrate 50, power reception device 60, and magnet collector 70 are supported by supporter 29 and accommodated in housing 21.

Housing 21 includes hollow grip 22, upper cap 26 covering an upper end of grip 22, and lower cap 27 covering a lower end of grip 22. Grip 22 tapers from upper end 26 toward lower end 27.

As FIG. 3 shows, projection 23A is formed on the rear face of grip 22. This projection 23A projects outside grip 22 and extends circumferentially but discontinuously. Grip 22 includes supported section 23 at a section lower than projection 23A, and this supported section 23 is to be covered with holder 84 when the lower section is supported by charging stand 80 (refer to FIG. 1). Supported section 23 is formed such that the upper end thereof agrees with projection 23A.

Upper cap 26 is fit to the upper end of grip 22, and disc-shaped elastic member 28A is mounted on the top face of upper cap 26. Output shaft 31 is projectable from elastic member 28A. Between upper cap 26 and the inner wall of grip 22, elastic member 28B (e.g. O-ring) is provided.

Lower cap 27 is fit to the lower end of grip 22 such that lower cap 27 is screwed with screw B to supporter 29 from the bottom. Between lower cap 27 and the inner wall of grip 22, elastic member 28C (e.g. O-ring) is provided. Between lower cap 27 and the bottom face of supporter 29, elastic member 28D is provided.

As FIG. 2 shows, display section 24 is mounted to main body 20 for a user to read. Display section 24 includes ion-display 24A, drive-mode display 24B, remaining battery display 24C, and recharge-display 24D.

Respective displays 24A- 24D are formed of, for instance, LEDs.

Ion-display 24A indicates with lighting that ions are generated at head 11.

Drive-mode display 24B lights in response to a vibration type of head 11. The vibration types of head 11 are set by driving modes of driving section 30 (refer to FIG. 3).

Remaining battery display 24C displays in response to a voltage of rechargeable battery 41 (refer to FIG. 3) of power supply section 40.

Respective displays 24A - 24D are mounted to substrate 50.

Respective displays 24A - 24D confront highly light transmissible material in grip 22 so that light exposure from the displays can be seen.

Holes can be punched on grip 22 so that at least a part of each one of displays 24A - 24D can be exposed from the surface of grip 22.

Displays 24A - 24D are situated at places different from supported section 23 so that a user can recognize displays 24A - 24D even when main body 20 is supported by charging stand 80 (refer to FIG. 1). Recognizable recharge display 24D, in particular, allows a user to understand whether or not the toothbrush is being charged.

Power-supply button 25 is provided to main body 20 for a user to operate, and at least a part of button 25 is exposed from the surface of grip 22. A push of power-supply button 25 allows a driving control section (not shown) to control driving section 30 (refer to FIG. 3) based on a set driving mode.

As FIG. 3 shows, driving section 30 is supported by main body 20 such that output shaft 31 projects from the upper end of housing 21. Driving section 30 is, for instance, an electric linear actuator. Drive of driving section 30 prompts output shaft 31 to vibrate, which causes head 11 (refer to FIG. 1) mounted to output shaft 31 to vibrate. Assume that driving section 30 is an electric motor, and output shaft 31 is an eccentric shaft eccentric with respect to a rotary shaft of the electric motor, then drive of the electric motor will prompt the eccentric shaft to vibrate, thereby vibrating head 11.

Power supply section 40 includes rechargeable battery 41, which is supported by plate 42 at the upper end and the lower end. Substrate 50 is placed inside grip 22 and skirts the inner wall of grip 22. Power supply section 40 supplies electric power to driving section 30.

Power reception unit 61, viz. a secondary power supply section of power reception device 60, is placed near to bottom face 27A of grip 22. Power reception unit 61 includes power reception coil 62 and magnet collecting coil 71 of magnet collector 70. Power reception coil 62 and magnet collecting coil 71 are wound on magnetic core 63 shaped like a bobbin. Power reception coil 62 is wound on the outer rim of magnet collecting coil 71. Magnetic core 63 is formed by attaching resin to ferrite. Magnet collecting coil 71 and power reception coil 62 are isolated by insulation tape wound between them.

Driving section 30 is placed around upper cap 26 inside grip 22, and power reception coil 62 is placed around lower cap 27 inside grip 22. Power supply section 40 is situated between driving section 30 and coil 62.

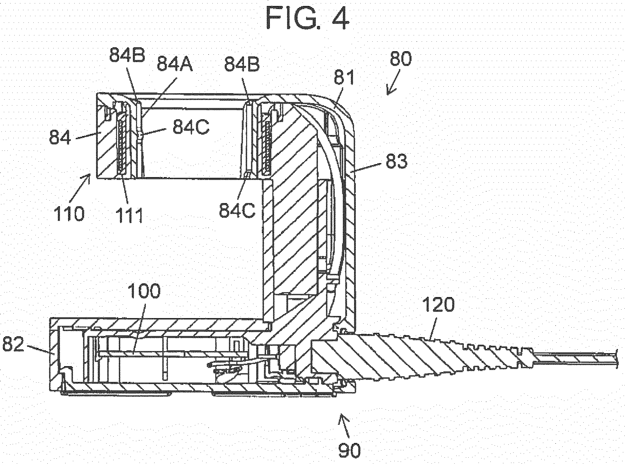

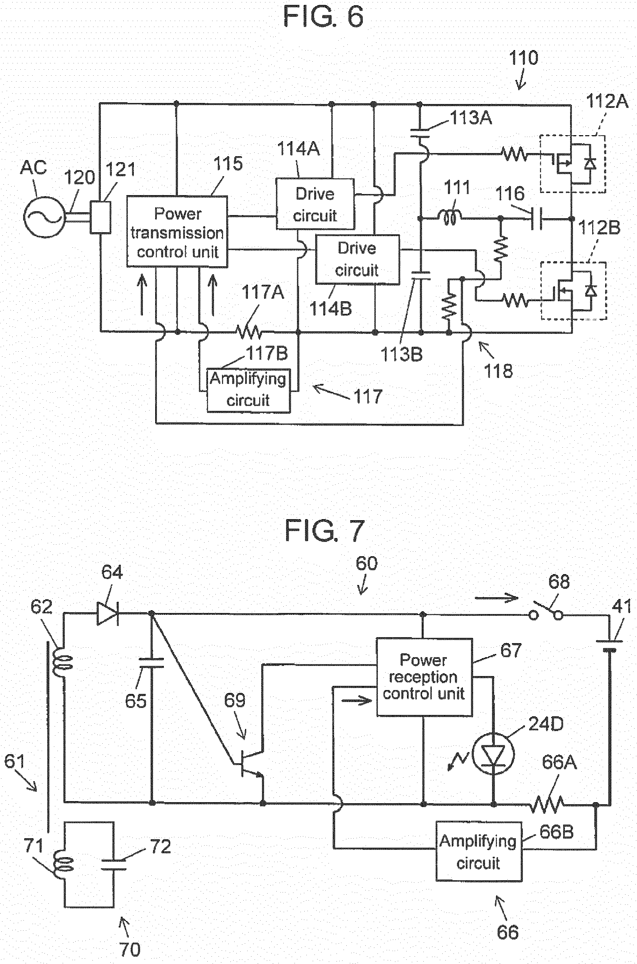

As FIG. 4 shows, charging stand 80 includes housing 81, connecting section 90 to be connected to an ac power source (refer to FIG. 6), substrate 100, and power transmission device 110. Substrate 100 and power transmission device 110 are accommodated in housing 81.

Housing 81 includes pedestal 82 to be placed on a usable site (e.g. on furniture), pillar 83 extending upward from a part of outer wall of pedestal 82, and holder 84 extending laterally from the top of pillar 83. Holder 84 and pedestal 82 extend in the same direction from pillar 83, so that holder 84 confronts pedestal 82. Holder 84 includes hole 84A extending height-wise. Main body 20 can be inserted into hole 84A, which is annularly shaped in this embodiment.

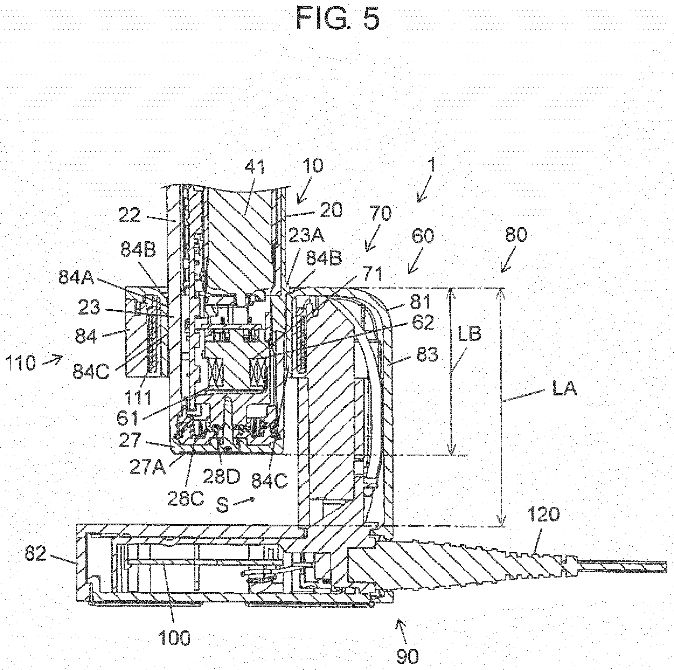

As FIG. 5 shows, an inner diameter of hole 84A is slightly greater than an outer diameter of a place where power reception coil 62 is situated on grip 22, so that a lower part of grip 22 can be inserted into hole 84A.

Projections 23A protruding outside grip 22 are formed on an upper section than the power reception coil situated on grip 22. Projections 23A hook on recess 84B formed on the rim of an opening at an upper end of hole 84A of holder 84.

As FIG. 5 shows, distance LA from recess 84B to the top face of pedestal 82 is greater than distance LB from projection 23A to underside 27A formed by lower cap 27 of main body 20.

The structure discussed above allows forming space S between underside 27A of main body 20 and the top face of pedestal 82 when main body 20 is inserted into hole 84A. Main body 20 is thus supported by charging stand 80 with underside 27A of main body 20 being lifted from the top face of pedestal 82.

As FIG. 4 shows, two guides 84C are formed on the inner wall of hole 84A, and they protrude toward the center axis of hole 84A. Two guides 84C are situated oppositely to each other with respect to the center axis and at different places axially.

During main body 20 (refer to FIG. 5) being inserted in hole 84A, two guides 84C thus allow main body 20 to stand height-wise in parallel to the axial line of hole 84A.

Connecting section 90 is formed at a lower end section of pillar 83 and oppositely to pedestal 82 with respect to pillar 83. Connecting section 90 is shaped like a recess and includes terminals therein. Through these terminals, electric power is supplied to power transmission device 110. Substrate 100 is situated inside pedestal 82. Power transmission coil 111 of power transmission device 110 is situated in holder 84.

A circuit structure of power transmission device 110 is described with reference to FIG. 6.

Power transmission device 110 is connected to ac power supply AC via power line 120, which includes power-supply circuit 121 for converting the ac electric power of ac power supply AC to dc electric power.

Power transmission device 110 includes power transmission coil 111, first switching element 112A, second switching element 112B, capacitors 113A, 113B, first drive circuit 114A, second drive circuit 114B, power transmission control unit 115, power transmission resonant capacitor 116, electric current sensing circuit 117, and voltage sensing circuit 118.

In this embodiment, the control device of the noncontact power supply device is power transmission control unit 115 in power transmission device 110; however, the control device can be structured in a place other than power transmission device 110.

Switching elements 112A, 112B, capacitors 113A, 113B, drive circuits 114A, 114B, power transmission control unit 115, power transmission resonant capacitor 116, electric current sensing circuit 117, and voltage sensing circuit 118 are mounted on substrate 100 (refer to FIG. 4).

First switching element 112A and second switching element 112B supply a dc electric current generated by power supply circuit 121 to power transmission coil 111. Switching elements 112A and 112B are connected to each other in series.

First switching element 112A and second switching element 112B employ, for instance, FETs (field effect transistor). In this case, one of switching elements 112A and 112B is N-channel FET, and the other one is P-channel FET.

These two switching elements 112A and 112B form a half-bridge circuit, and they are connected respectively with capacitors 113A and 113B in parallel.

First switching element 112A is connected with first drive circuit 114A, and second switching element 112B is connected with second drive circuit 114B.

Power transmission control unit 115 controls the electric power to be supplied from drive circuits 114A and 114B to switching elements 112A and 112B. Control unit 115 outputs a command signal of PWM (pulse width modulation) to drive circuits 114A and 114B, which then supply the electric power based on the received command signal of PWM to switching elements 112A and 112B respectively. Repetitions of on and off by respective switching elements 112A and 112B allow generating an ac electric current from a dc electric current.

Power transmission resonant capacitor 116 is situated between switching elements 112A, 112B and power transmission coil 111, and connected to switching elements 112A, 112B, and coil 111 in series. In other words, transmission coil 111, resonant capacitor 116, and switching element 112A is connected together in series via resonant capacitor 116. In a similar way, transmission coil 111, resonant capacitor 116, and switching element 112B are connected together in series via resonant capacitor 116. Power transmission resonant capacitor 116 and power transmission coil 111 form a power transmission resonant circuit.

Electric current sensing circuit 117 includes resistor 117A and amplifying circuit 117B. Resistor 117A is used for sensing an input electric current connected to the ground of power transmission device 110, and amplifying circuit 117B is used for amplifying a voltage across resistor 117A. Amplifying circuit 117B converts an electric current to a voltage before outputting the voltage to power transmission control unit 115.

Between power transmission resonant capacitor 116 and power transmission coil 111, voltage sensing circuit 118 is connected. This circuit 118 is formed of two resistors, and senses resonant voltage V which is a voltage of the power transmission resonant circuit. Circuit 118 outputs resonant voltage V to power transmission control unit 115.

As FIG. 7 shows, magnet collector 70 includes magnet collecting coil 17 and magnet collecting resonant capacitor 72, which is mounted to substrate 50.

Power reception device 60 includes power reception coil 62 magnetically coupled to magnet collecting coil 71, diode 64, smoothing capacitor 65, electric current sensing circuit 66, power reception control unit 67, switch 68, timing sensing circuit 69, and recharge display 24D.

Diode 64, smoothing capacitor 65, electric current sensing circuit 66, power reception control unit 67, switch 68, and timing sensing circuit 69 are mounted to substrate 50 (refer to FIG. 3).

The alternating magnetic flux generated from power transmission coil 111 shown in FIG. 6 is interlinked with magnet collecting coil 71, to which electric power is transmitted by magnetic resonance. The electric power transmitted to magnet collecting coil 71 is transmitted to power reception coil 62 by electromagnetic induction, and then generates alternating electric power on power reception coil 62.

In other words, power transmission coil 111 (refer to FIG. 6) transmits electric power to power reception coil 62. The alternating electric power generated on reception coil 62 is converted by diode 64 from an ac electric current to a dc electric current.

Diode 64 is connected with smoothing capacitor 65 and rechargeable battery 41. Smoothing capacitor 65 reduces noises of the dc current converted by diode 64, and rechargeable battery 41 works as a load to which the dc current converted by diode 64 is supplied.

Between diode 64 and rechargeable battery 41, switch 68 is placed.

Electric current sensing circuit 66 includes resistor 66A and amplifying circuit 66B. Resistor 66A senses an input electric current connected to the ground of power reception device 60. Amplifying circuit 66B amplifies a voltage generated across resistor 66A, and converts the electric current to a voltage before outputting the voltage to power reception control unit 67.

Power reception control unit 67 switches on/off of switch 68, viz. control unit 67 switches a supply/non-supply of electric power to rechargeable battery 41.

Power reception control unit 67 turns on switch 68 when the voltage of rechargeable battery 41 decreases from a voltage equal to or greater than a given voltage to a voltage lower than the given voltage. Control unit 67 turns off switch 68 when the voltage of rechargeable battery 41 increases from the voltage lower than the given voltage to the voltage equal to or greater than the given voltage.

Power reception control unit 67 switches a display on recharge-display 24D.

Power reception control unit 67 lights recharge-display 24D while rechargeable battery 41 is charged, and does not light recharge-display 24D while rechargeable-battery 41 is not charged.

Power reception control unit 67 switches on/off of switch 68, thereby communicating with power transmission control unit 115 (refer to FIG. 6), which then senses, with the aid of voltage sensing circuit 118 (reefer to FIG. 6), resonant voltage V varied by the on/off of switch 68.

Timing sensing circuit 69 senses the presence of waveform, in a given period, of the alternating electric power generated by power reception coil 62. The waveform sensed by timing sensing circuit 69 is correlated with an output of the alternating electric power supplied to power transmission coil 111 (refer to FIG. 6). In other words, timing sensing circuit 69 senses the alternating electric power to be supplied to transmission coil 111.

Timing sensing circuit 69 is formed of, for instance, transistors. When the alternating electric power is generated on power reception coil 62, a voltage is applied continuously to coil 62, so that the transistors are kept in ON status. Timing sensing circuit 69 thus outputs first timing signal SA to power reception control unit 67.

On the other hand, when no alternating electric power is generated on coil 62, the transistors are kept in OFF status, so that sensing circuit 69 outputs second timing signal SB to power reception control unit 67.

Power transmission control unit 115 shown in FIG. 6 has two modes, viz. a first mode transmits the electric power to power reception coil 62 (refer to FIG. 7) to be supplied to rechargeable battery 41 (refer to FIG. 7), and a second mode transmits less electric power than that transmitted by the first mode to power transmission coil 111.

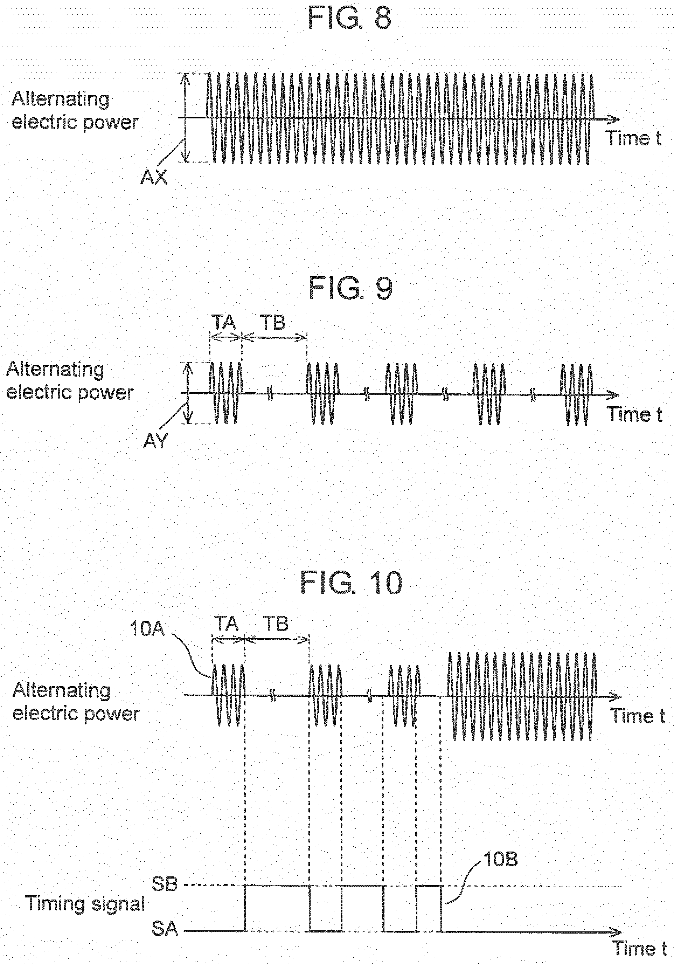

As FIG. 8 shows, when the first mode is selected, power transmission control unit 115 (refer to FIG. 6) supplies continuously the alternating electric power to transmission coil 111.

As FIG. 9 shows, when the second mode is selected, power transmission control unit 115 repeats period TA in which the alternating electric power is supplied, and period TB in which the alternating electric power is not supplied. Period TA is shorter than period TB. Period TA is for instance 50 milliseconds, and period TB is for instance 450 milliseconds.

Amplitude AY of the alternating electric power in the second mode is smaller than amplitude AX of that of in the first mode. As a result, when the second mode is selected, power transmission control unit 115 allows supplying electric power smaller than that transmitted in the first mode to power transmission coil 111.

In FIG. 10, signal 10A shows alternating electric power generated on power reception coil 62 when the electric power in the first mode following the second mode is transmitted from power transmission coil 111 (refer to FIG. 6) to power reception coil 62 (refer to FIG. 7). Signal 10B is a then timing signal supplied from the timing sensing circuit (refer to FIG. 7).

As signal 10A in FIG. 10 shows, during the power transmission from coil 111 to coil 62, an alternating electric current generated on power reception coil 62 is equivalent to an alternating electric current supplied to coil 111.

As signal 10B shows, timing sensing circuit 69 keeps outputting first timing signal SA to power reception control unit 67 when the first mode is selected, while it outputs repeatedly first timing signal SA and second timing signal SB to control unit 67 when the second mode is selected.

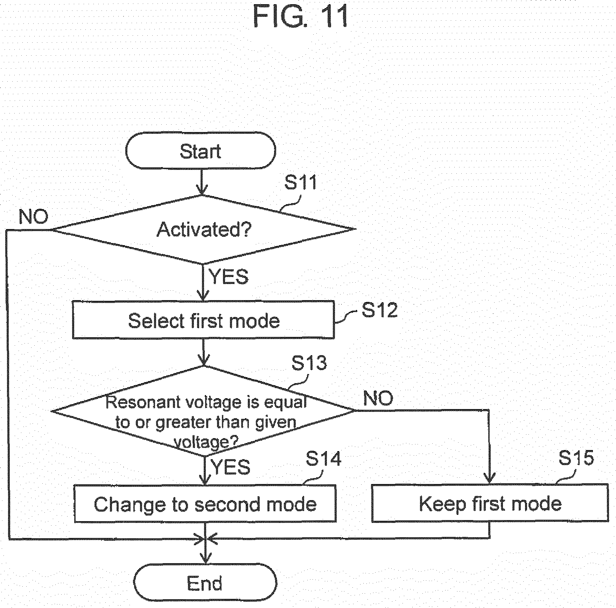

Next, a power transmission-mode switching process to be done by power transmission control unit 115 is demonstrated hereinafter with reference to FIG. 6 and FIG. 11.

First, power transmission control unit 115 determines whether or not power transmission device 110 is activated (step S11). To be more specific, a hookup of power line 120 to connecting section 90 (refer to FIG. 4) allows supplying electric power to power transmission control unit 115, then control unit 115 determines power transmission device 110 is activated. This determination (branch YES of step S11) allows control unit 115 to select the first mode (step S12), viz. control unit 115 initially selects the first mode, and outputs a command signal corresponding to the first mode to drive circuits 114A and 114B.

When power transmission control unit 115 determines power transmission device 110 is not activated (branch NO of step S11), control unit 115 ends the process.

Next, power transmission control unit 115 determines whether or not resonant voltage V is equal to or greater than given voltage VA (step S13). In step S13, when control unit 115 determines resonant voltage V is equal to or greater than given voltage VA (branch YES of step S13), control unit 115 changes the first mode to the second mode (step S14), then ends the process. In other words, control unit 115 outputs a command signal corresponding to the second mode to drive circuits 114A and 114B.

On the other hands, in step S13, when power transmission control unit 115 determines resonant voltage V is lower than given voltage VA (branch NO of step S13), control unit 115 keeps the first mode (step S15) before ending the process.

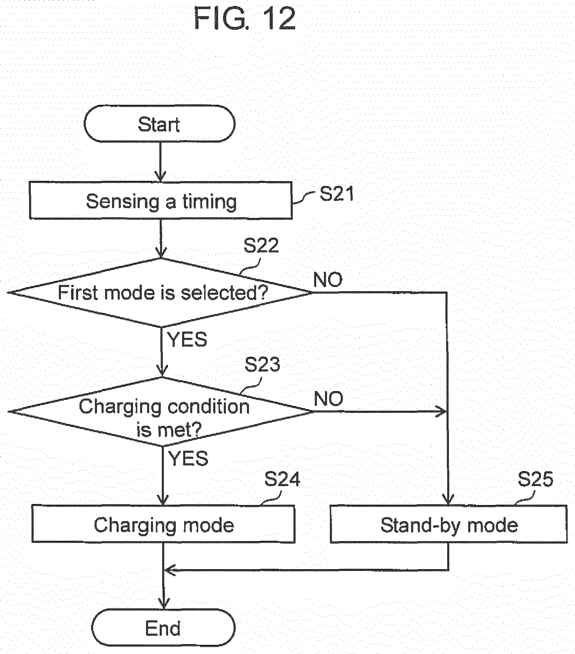

Next, a power reception mode switching process to be done by power reception control unit 67 is demonstrated hereinafter with reference to FIG. 7 and FIG. 12.

First, power reception control unit 67 carries out a sensing of a timing of the alternating electric power generated on power reception coil 62 (step S21). Then control unit 67 determines whether or not the first mode is selected (step S22). To be more specific, when timing sensing circuit 69 senses that first timing signal SA is kept being output for a period longer than or equal to a given period, control unit 67 determines the first mode is selected (branch YES of step S22), and moves on to step S23. When timing sensing circuit 69 senses that first timing signal SA is output intermittently during a given period, control unit 67 determines the second mode is selected (branch NO of stepS22), and moves on to step S25.

In step S22, when timing sensing circuit 69 determines the first mode is selected (branch YES of step S22), power reception control unit 67 determines whether or not a charging condition is met (step S23). The charging condition is met, for instance, when the voltage of rechargeable battery 41 is lower than the given voltage.

In step S23, when power reception control unit 67 determines the charging condition is met (branch YES of step S23), control unit 67 sets power reception device 60 to a charging mode (step S24). At this time, control unit 67 controls switch 68, thereby transmitting a supply request signal to power transmission control unit 115. At this time also control unit 67 turns on switch 68 for connecting power reception coil 62 and rechargeable battery 41 together, and yet, control unit 67 lights recharge-display 24D.

In step 23, when power reception control unit 67 determines the charging condition is not met (branch NO of step 23), control unit 67 sets power reception device to a stand-by mode (step S25). During the stand-by mode, control unit 67 controls switch 68, thereby transmitting a supply-stop signal to power transmission control unit 115. At this time control unit 67 turns off switch 68 to cut off power reception coil 62 from rechargeable battery 41, and yet control unit 67 puts out recharge-display 24D.

In step S22, when timing sensing circuit 69 determines the second mode is selected (branch NO of step S22), control unit 67 sets power reception device 60 to the stand-by mode too (step S25).

When power transmission control unit 115 (refer to FIG. 6) receives the supply request signal from power reception control unit 67, control unit 115 selects the first mode. When control unit 115 receives the supply stop signal from control unit 67, control unit 115 selects the second mode.

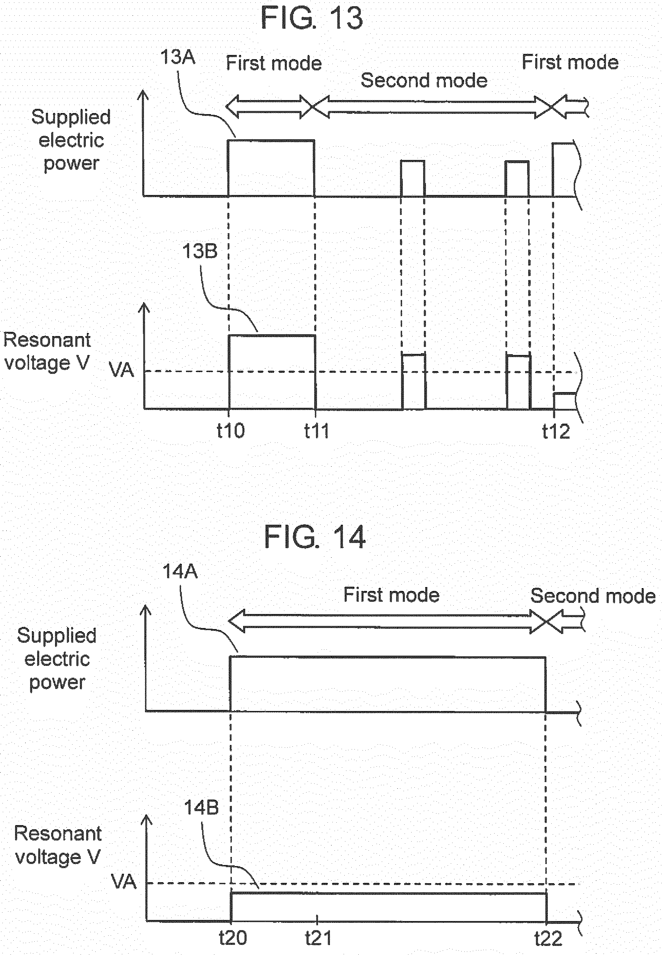

Next, a first example of switching a power transmission mode is demonstrated hereinafter with reference to FIG. 13. This switching is done by control unit 115.

In FIG. 13, signal 13A shows a timing of supplying electric power from power transmission device 110 to transmission coil 111, and signal 13B shows resonant voltage V generated in the power transmission resonant circuit (refer to FIG. 6).

Time t10 shows a time when power transmission device 110 is activated. At this time, control unit 115 selects the first mode.

At time t11, a given time has lapsed after the activation of device 110. At this time, as signal 13B shows, power transmission control unit 115 determines resonant voltage V is equal to or greater than given voltage VA. In other words, when power reception device 60 is not detected during a period from a selection of the first mode to a time by then a given time (a first given time) has lapsed, control unit 115 changes the first mode to the second mode as signal 13A shows.

At time t12, toothbrush 10 (refer to FIG. 5) is inserted into hole 84A of charging stand 80 (refer to FIG. 6), and yet, toothbrush 10 receives the supply request signal from power reception control unit 67 (refer to FIG. 7). Power transmission control unit 115 changes, as signal 13A shows, the second mode to the first mode based on the supply request signal. After time t12, control unit 115 keeps using the first mode until it receives the supply stop signal from control unit 67, or until toothbrush 10 is removed from hole 84A of charging stand 80 and resonant voltage V becomes greater than given voltage VA.

Next, a second example of switching the power transmission mode is demonstrated hereinafter with reference to FIG. 14. This switching is done by power transmission control unit 115.

Similar to FIG. 13, signal 14A in FIG. 14 shows a timing of supplying the electric power from power transmission device 110 to transmission coil 111, and signal 14B shows resonant voltage V generated in the transmission resonant circuit (refer to FIG. 6).

At time t20, device 110 is activated, and at this time transmission control unit 115 selects the first mode.

At time t21, a given time has lapsed after the activation of device 110. At this time, as signal 14B shows, power transmission control unit 115 determines resonant voltage V is lower than given voltage VA. In other words, when power reception device 60 is detected during a period from a selection of the first mode to a time by then a given time (a first given time) has lapsed, control unit 115 maintains the first mode as signal 14A shows.

At time t22, control unit 115 receives the supply stop signal from power reception control unit 67, and at this time, power transmission control unit 115 changes, as signal 14A shows, the first mode to the second mode based on the supply stop signal. After time t22, control unit 115 keeps using the second mode until it receives the supply request signal from power reception control unit 67.

Noncontact power supply device 1 having the structure discussed above produces the advantages below:

While power transmission device 60 is situated at a place where power transmission device 110 can detect device 60 (hereinafter the place is referred to as a detectable place), assume that power transmission control unit 115 of noncontact power supply device 1 is activated. Then the first mode is initially selected, so that the electric power supposed to charge rechargeable battery 41 of power reception device 60 is transmitted from power transmission device 110 to power reception device 60. Different from a case in which the second mode is initially selected after the activation of power transmission control unit 115, the foregoing mechanism allows eliminating a time, in which no electric power is transmitted to power reception device 60, involving in the switchover from the second mode to the first mode. As a result, the electric power can be promptly transmitted from power transmission device 110 to power reception device 60.

In the conventional noncontact power supply device, after the activation of the power transmission device, the power reception device is detected, and then a command signal of changing to the first mode is issued. Until the detection of the power reception device by the power transmission control unit, this mechanism thus adversely produces a time in which no electric power is transmitted to the power reception device. Nevertheless noncontact power supply device 1 in accordance with the first embodiment allows power transmission control unit 115 to select initially the first mode at the activation of control unit 115, whereby the electric power can be transmitted promptly from power transmission device 110 to power reception device 60.

Since the electric power is promptly transmitted from transmission device 110 to reception device 60 at the activation of power transmission control unit 115, control unit 115 can light immediately the recharge-display 24D, so that a user can recognize promptly the start of charging.

If power reception device 60 is situated at an improper place for power transmission device 110 to transmit electric power, noncontact power supply device 1 in accordance with this first embodiment allows avoiding the first mode to be kept longer than the given time. As a result, power consumption can be reduced.

When power reception device 60 is situated at a detectable place for power transmission device 110, noncontact power supply device 1 in accordance with the first embodiment allows power transmission control unit 115 to select and keep the first mode after the activation of control unit 115. This mechanism allows supplying the electric power from power transmission device 110 to power reception device 60 more promptly than the case in which the first mode is switched to the second mode after reception device 60 is detected by transmission device 110.

In general, the power reception device is detected by the power transmission control unit with a method using a variation of resonant voltage V per unit time. Nevertheless with this method, the power transmission control unit cannot detect the power reception device situated at the detectable place with the power line being connected to the connecting section.

However, noncontact power supply device 1 in accordance with the first embodiment allows power transmission control unit 115 to detect power reception device 60 based on the fact that resonant voltage V is lower than given voltage VA. When power reception device 60 is situated at the detectable place with power line 120 being connected to connecting section 90, this mechanism allows power transmission control unit 115 to determine whether or not power reception device 60 is situated at the detectable place.

In noncontact power supply device 1 in accordance with the first embodiment, power reception control unit 67 selects a charging mode when power transmission control unit 115 selects the first mode, and control unit 67 selects a stand-by mode when control unit 115 selects the second mode. In other words, the charging mode is selected only when the first mode, which fits to the charging, is used, and actions proper to the charging are carried out. This mechanism allows not lighting recharge-display 24D during the second mode being selected, and yet, no electric power is supplied to rechargeable battery 41 during the second mode being selected.

### Modifications

The present disclosure is not limited to the foregoing embodiment, but applicable to, for example, the modifications below.

### Modification Example 1

During the second mode being selected, amplitude AY is set equal to or greater than amplitude AX used during the first mode being selected.

### Modification Example 2

During the second mode being selected, the alternating electric power is kept being generated. In this case, when amplitude AY is set smaller than amplitude AX, less power consumption is expected than that during the first mode being selected.

In this case, timing sensing circuit 69 can be changed to a voltage sensing circuit. Power reception control unit 67 determines whether or not the first mode is selected based on the fact whether or not a voltage of power reception coil 62 is greater than an intermediate voltage value between the voltage during the first mode being selected and the voltage during the second mode being selected.

### Modification Example 3

In step S13 shown in FIG. 11, keeping the first mode or not is determined based on a value of resonant voltage V, viz. whether or not voltage V is greater than given voltage VA. Nevertheless, this determination can be carried out based on an electric current value sensed with amplifying circuit 117B. In this case, when main body 20 is inserted into hole 84A of charging stand 80 so that power reception unit 61 is situated inside power transmission coil 111, the electric current sensed with amplifying circuit 117B decreases. As a result, this mechanism allows determining main body 20 is inserted into hole 84A of charging stand 80 when the electric current sensed with amplifying circuit 17B is equal to or lower than the given value. The first mode is thus maintained. In step S13, at least one of the following conditions is met, the process can move on to step S14 for selecting the second mode: in step S13, resonant voltage V is equal to or greater than given voltage AV, and the electric current sensed with amplifying circuit 117B is equal to or lower than the given value.

### Modification Example 4

Power transmission device 110 of noncontact power supply device 1 in accordance with the first embodiment is formed of a full-bridge circuit.

### Modification Example 5

In noncontact power supply device 1 in accordance with the first embodiment, charging stand 80 is equipped with magnet collector 70.

### Modification Example 6

Magnet collector 70 can be omitted. In this case, magnet collecting resonant capacitor 72 is replaced with a power reception resonant capacitor connected to power reception coil 62, and the power reception resonant capacitor and power reception coil 62 form a resonant circuit.

### Modification Example 7

Power transmission control unit 115 of noncontact power supply device 1 in accordance with the embodiment is situated not in power transmission device 110 but at other places than power transmission device 110 of charging stand 80, namely, power transmission control unit 115 is disposed as control device 115 inside power reception device 60 of electric toothbrush 10, or outside power reception device 60. Power transmission control unit 115 can be also prepared as control device 115 independent of noncontact power supply device 1.

The present disclosure further includes the embodiments below.

### SECOND EXEMPLARY EMBODIMENT

A control device of noncontact power supply device 1 in accordance with the second embodiment of the present disclosure comprises the following structural elements:
power transmission device 110 including power transmission coil 111 for outputting an alternating magnetic flux upon receiving alternating electric power;
power transmission control unit 115 for controlling the alternating electric power to be supplied to power transmission coil 111;
power reception device 60 including power reception coil 62 for receiving the electric power transmitted by the alternating magnetic flux; and
power reception control unit 67 for controlling power reception device 60.
In the control device of noncontact power supply device 1, power transmission control unit 115 includes a first mode and a second mode. At least one of a waveform and an amplitude within a given period of the alternating power to be supplied to power transmission coil 111 is different in the first mode from those in the second mode. Power reception control unit 67 controls power reception device 60 based on at least one of the waveform and the amplitude within the given period of the electric power transmitted to power reception coil 62.

### THIRD EXEMPLARY EMBODIMENT

In the control device of noncontact power supply device 1 in accordance with the third embodiment of the present disclosure, during the first mode being selected, power transmission control unit 115 controls alternating electric power to be supplied to power transmission coil 111 in order to transmit electric power to power reception coil 62 before the electric power is supplied to load 41 of power reception device 60. During the second mode being selected, power transmission control unit 115 controls the alternating electric power such that less alternating electric power than that transmitted by the first mode be supplied to power transmission coil 111. When at least one of the waveform and the amplitude within the given period of the electric power transmitted to power reception coil 62 is equivalent to the counterpart of those in the first mode, power reception control unit 67 selects a charging mode for supplying the electric power generated on power reception coil 62 to load 41 connected to coil 62. When at least one of the waveform and the amplitude within the given period of the electric power transmitted to power reception coil 62 is equivalent to the counterpart of those in the second mode, power reception control unit 67 selects a stand-by mode for not supplying the electric power to load 41.

### FOURTH EXEMPLARY EMBODIMENT

In the control device of noncontact power supply device 1 in accordance with the fourth embodiment of the present disclosure, during the first mode being selected, power transmission control unit 115 controls alternating electric power to be supplied to power transmission coil 111 in order to transmit electric power to power reception coil 62 before the electric power is supplied to load 41 of power reception device 60. During the second mode being selected, power transmission control unit 115 controls the alternating electric power such that less alternating electric power than that transmitted by the first mode be supplied to power transmission coil 111. When at least one of a waveform and an amplitude within a given period of the electric power transmitted to power reception coil 62 is equivalent to the counterpart of those in the first mode, power reception control unit 67 selects a charging mode for outputting a first display signal. When at least one of the waveform and the amplitude within the given period of the electric power transmitted to power reception coil 62 is equivalent to the counterpart of those in the second mode, power reception control unit 67 selects a stand-by mode for outputting a second display signal.

As discussed above, the control device of the noncontact power supply device in accordance with one of the embodiments of the present disclosure comprises the following structural elements:
a power transmission device including a power transmission coil for outputting an alternating magnetic flux upon receiving alternating electric power; and
a power reception device including a power reception coil for receiving the electric power transmitted by the alternating magnetic flux. The control device includes a power transmission control unit for controlling the alternating power to be supplied to the power transmission coil. The power transmission control unit has two modes, viz. a first mode and a second mode. The first mode controls the alternating electric power to be supplied to the transmission coil before the electric power is transmitted to power reception coil 62. This electric power is to be finally supplied to a load of power reception device 60. The second mode controls alternating electric power such that less electric power than that transmitted by the first mode be supplied to the power transmission coil. The control device initially selects the first mode after it is activated.

At the activation of the control device of noncontact power supply device, the foregoing structure allows the control device to initially select the first mode while the power reception device is situated at a detectable place for the power transmission device. This mechanism, after the activation of the control device, allows the power transmission device to transmit the electric power to the power reception device for supplying the electric power to the load of the power reception device. The foregoing mechanism thus differs from a case where the second mode is initially selected after the activation of the control device, so that a period in which no electric power is transmitted to the power reception device can be eliminated, so that the electric power can be promptly supplied from the power transmission device to the power reception device. The period of no electric power involves in a switchover from the second mode to the first mode.

The control device of the noncontact power supply device in accordance with one of the embodiments of the present disclosure can have the following structure: After the power transmission control unit is activated, the control unit initially selects the first mode; nevertheless if the power reception device cannot be detected until a given time has lapsed, the transmission control unit can switch the first mode to the second mode.

If the power reception device is situated at an improper place for the power transmission device to transmit electric power, the structure discussed above allows avoiding the first mode to be kept for a longer time than a given time. As a result, the power consumption can be reduced.

The control device of the noncontact power supply device of the present disclosure can be structured as follows: If the power reception device can be detected during a period from an initial selection of the first mode after the activation of the power transmission control unit before a lapse of the given time, the power transmission control unit can maintain the first mode.

When the power reception device is situated at a detectable place for the power transmission device, the structure discussed above allows the first mode to be maintained after the activation of the control device. Comparing with the case where the first mode is switched to the second mode when the power reception device is situated at the detectable place for the power transmission device, the structure discussed above allows transmitting electric power more promptly from the power transmission device to the power reception device.

In the control device of the noncontact power supply device in accordance with one of the embodiments of the present disclosure, after the activation of the power transmission device, the power transmission control unit initially selects the first mode, and then, if the power reception device can be detected before a lapse of a given time different from the given time discussed previously, the power transmission control unit maintains the first mode.

The noncontact power supply device in accordance with one of the embodiments of the present disclosure includes the control device discussed above.

The foregoing structure allows transmitting electric power promptly from the power transmission device to the power reception device.

### INDUSTRIAL APPLICABILITY

The present disclosure provides a noncontact power supply device and its control device that allow transmitting electric power promptly from a power transmission device to a power reception device. The present disclosure is thus suitable for small size electric apparatuses including such as an electric razor, an electric shaver, and the like.

### REFERENCE MARKS IN THE DRAWINGS

- 1: noncontact power supply device
- 10: electric toothbrush
- 11: head
- 20: main body
- 21, 81: housing
- 22: grip
- 23: supported section
- 23A: projection
- 24: display section
- 25: power supply button
- 26: upper cap
- 27: lower cap
- 28A - 28D: elastic member
- 29: supporter
- 30: driving section
- 31: output shaft
- 40: power supply section
- 41: rechargeable battery (load)
- 50, 100: substrate
- 60: power reception device
- 61: power reception unit
- 62: power reception coil
- 63: magnetic core
- 66,: 117 electric current sensing circuit
- 67: power reception control unit
- 69: timing sensing circuit
- 70: magnet collector
- 71: magnet collecting coil
- 72: magnet collecting resonant capacitor
- 80: charging stand
- 82: pedestal
- 83: pillar
- 84: holder
- 84A: hole
- 84B: recess
- 84C: guide
- 90: connecting section
- 110: power transmission device
- 111: power transmission coil
- 114A, 114B: drive circuit
- 115: power transmission control unit (control device)
- 116: power transmission resonant capacitor
- 118: voltage sensing circuit
- 120: power line
- 121: power supply circuit

## Claims

1. A control device for a noncontact power supply device,
the noncontact power supply device comprising:
a power transmission device including a power transmission coil outputting an alternating magnetic flux upon receiving alternating electric power; and
a power reception device including a power reception coil receiving electric power transmitted by the alternating magnetic flux,
the control device comprising a power transmission control unit controlling the alternating electric power to be supplied to the power transmission coil,
wherein the power transmission control unit includes:
a first mode for controlling the alternating electric power to be supplied to the power transmission coil for transmitting electric power, to be supplied to a load of the power reception device, to the power reception coil; and
a second mode for controlling the alternating electric power for supplying electric power less than the electric power transmitted by the first mode to the power transmission coil, and
wherein the power transmission control unit initially selects the first mode after an activation.

2. The control device according to claim 1, wherein the power transmission control unit switches the first mode to the second mode when the power reception device is not detected before a lapse of a given time from the initial selection of the first mode after the activation.

3. The control device according to claim 2, wherein the power transmission control unit maintains the first mode when the power reception device is detected before a lapse of the given time from the initial selection of the first mode after the activation.

4. The control device according to claim 1, wherein the power transmission control unit maintains the first mode when the power reception device is detected before a lapse of a given time from the initial selection of the first mode after the activation.

5. A noncontact power supply device comprising the control device as defined in one of claims 1 - 4.
